# EUROPÄISCHE PATENTSCHRIFT

(11) **EP 1 503 479 B1**
(45) Veröffentlichungstag und Bekanntmachung des Hinweises auf die Patenterteilung: **09.04.2008**
(21) Anmeldenummer: 03016031.1
(22) Anmeldetag: 15.07.2003
(51) Int. Cl.: H02K 5/10, H02K 21/22

(54) **Aussenläufermotor mit Dichtung**
Outer rotor motor with sealing
Moteur avec un rotor externe et un joint d'étanchéité

(43) Veröffentlichungstag der Anmeldung: 02.02.2005
(73) Patentinhaber: Ziehl-Abegg AG, 74653 Künzelsau (DE)
(72) Erfinder: Kress, Volker, 74635 Kupferzell (DE); Mauthe, Ralf, 74348 Lauffen (DE)
(74) Vertreter: Jacoby, Georg

(56) Entgegenhaltungen:
- FR-A- 2 650 130
- US-B1- 6 485 022
- PATENT ABSTRACTS OF JAPAN vol. 017, no. 351 (E-1392), 2. Juli 1993 (1993-07-02) -& JP 05 049206 A (FUJI ELECTRIC CO LTD), 26. Februar 1993 (1993-02-26)
- PATENT ABSTRACTS OF JAPAN vol. 017, no. 204 (P-1524), 21. April 1993 (1993-04-21) -& JP 04 345964 A (FUJI ELECTRIC CO LTD), 1. Dezember 1992 (1992-12-01)
- PATENT ABSTRACTS OF JAPAN vol. 017, no. 480 (E-1425), 31. August 1993 (1993-08-31) -& JP 05 115163 A (FUJI ELECTRIC CO LTD), 7. Mai 1993 (1993-05-07)

## Beschreibung

Die vorliegende Erfindung betrifft einen Außenläufermotor mit einem im wesentlichen glockenförmigen Rotor, einem Stator, und einer Dichtung zwischen Rotor und Stator zur Abdichtung des Motorinnenraums, die am achsfernen offenen Ende des glockenförmigen Rotors angeordnet ist.

Die gattungsgemäße DE 197 39 001 A1 zeigt einen Außenläufermotor, bei dem die Dichtung im Zwischenraum zwischen der Innenseite der zylindrischen Außenwand des Stators und der zylindrischen Außenseite des glockenförmigen Rotors angeordnet ist. Die Dichtung ist ein Dichtring mit einem schleifenden Dichtungsrand oder einer Dichtlippe. Mehrere solcher Dichtringe sind nebeneinander zwischen Rotor und Außenwand vorgesehen, um untereinander zylindrische Ringräume zu bilden. Die Dichtringe sind aus Filz, der mit Öl getränkt oder mit Graphit benetzt sein kann, um die Reibung zwischen drehendem und stehendem Teil zu vermindern. Zur Abdichtung zwischen Rotor und Stator kann auch eine Labyrinthdichtung, eine Bürstendichtung oder dergleichen vorgesehen sein oder mehrere der genannten Dichtungen kombiniert werden.

Die EP 0 405 002 A1 zeigt einen Außenläufermotor mit glockenförmigem Rotor und Stator, wobei der glockenförmige Rotor von einer Verschlußplatte abgeschlossen ist, die als Lagerschild wirkt. Die mitdrehende Verschlußplatte ist gegenüber einer Montageplatte mittels einer achsnah angeordneten Lippenringdichtung und eines Labyrinthganges abgedichtet. Im achsnahen Bereich des Motors sind nur geringe Geschwindigkeiten zu beherrschen, was dort den Einsatz einer Lippenringdichtung ermöglicht.

Die JP 5049206 zeigt einen Außenläufermotor, der einen Stator und einen glockenförmigen Rotor mit Rotorhaube und Rotorumguß umfaßt. Der Rotorhaube gegenüberliegend ist am Rotorumguß eine Abdeckplatte angebracht, die sich bis zur Motorachse erstreckt. Damit bildet sich ein Ringspalt zwischen der Abdeckplatte und der Motorachse in unmittelbarer Nähe zur Motorachse. Dieser Ringspalt wird durch einen L-förmigen Spaltgang und einen darin angeordneten Dichtung abgedichtet. Die Dichtung umfaßt eine Dichtlippe, die an einem Wandabschnitt der Abdeckplatte schleift.

Die FR 2650130 zeigt einen Motor mit zwei in der Nähe der Motorachse angeordneten Dichtungen zur Abdichtung des Motorinnenraumes. Die Dichtung kann entweder zwei Dichtlippen umfassen, von der die eine an einer sich vorbeidrehenden Fläche schleift und die andere von dieser Fläche leicht beabstandet ist. Sie kann auch einen Labyrinthgang umfassen, in dem zwei an verschiedenen Gangabschnitten des Labyrinthganges angeordnete Dichtlippen enthalten sind. Zudem kann sie auch eine Dichtlippe mit zwei Erhöhungen umfassen, die - vom Motoraußenraum in den Motorinnenraum gesehen hinter der Dichtlippe angeordnet sind.

Der Erfindung liegt die Aufgabe zugrunde, einen gattungsgemäßen Außenläufermotor bereitzustellen, dessen Motorinnenraum gut abgedichtet ist und dabei die durch die Abdichtung verursachte Reibung vermindert ist, sowie eine entsprechende Dichtung.

Die Erfindung löst diese Aufgabe mit dem Gegenstand des Anspruchs 1. Bevorzugte Ausgestaltungen der Erfindung sind in den Unteransprüchen beschrieben.

Die Erfindung sowie weitere Vorteile und Merkmale der Erfindung werden nunmehr anhand bevorzugter Ausführungsbeispiele mit Bezug auf die beigefügte Zeichnung näher erläutert, in der
- Fig. 1: eine perspektivische Ansicht eines Außenläufermotors gemäß einem bevorzugten Ausführungsbeispiel der Erfindung zeigt; und
- Fig. 2a-c: eine Längsschnittansicht, eine Querschnittansicht bzw. eine perspektivische Ansicht einer im Außenläufermotor der Fig. 1 vorgesehenen Dichtung gemäß einem bevorzugten Ausführungsbeispiel der Erfindung zeigen.

Gemäß einem Ausführungsbeispiel ist ein Außenläufermotor mit einem im wesentlichen glockenförmigen Rotor und einem Stator sowie einer Dichtung zwischen Rotor und Stator zur Abdichtung des Motorinnenraums vorgesehen. Die Dichtung ist am achsfernen offenen Ende des glockenförmigen Rotors angeordnet. Achsfern bedeutet hier, daß die Dichtung in einem radialen Abstand zu einer zentralen Achse bzw. Welle des

Außenläufermotors angeordnet ist, bei dem die Relativgeschwindigkeit zwischen Rotor und Stator hoch ist, höher als in der Nähe der zentralen Achse. Die genaue Lage der Dichtung zwischen dem sich drehenden Rotor und Stator hängt von der speziellen Bauart des Außenläufermotors ab. Wenn sich die Rotorglocke teilweise über den Stator stülpt, oder umgekehrt, so kann die Dichtung zwischen der Innenseite des Rotors und der Außenseite des Stators vorgesehen sein bzw. umgekehrt. Oftmals steht die sich drehende Stirnseite des Rotors einem festen Gehäuseteil des Stators gegenüber, wobei dann die Dichtung im wesentlichen im radial verlaufenden Spalt zwischen Stirnseite und Gehäuseteil angeordnet sein kann.

Der Begriff "glockenförmig" ist auch eher funktionell zu verstehen, daß nämlich der Rotor - in Axialrichtung der Motorwelle gesehen - an einem Ende über den Bodenabschnitt der Rotorglocke bzw. über die Rotorhaube mit der Motorwelle verbunden ist (also einseitig gelagert ist), und an seinem anderen Ende in Axialrichtung im wesentlichen offen ausgebildet ist, beispielsweise eine offene Zylinderform hat.

Bei diesem Ausführungsbeispiel umfaßt die Dichtung einen Labyrinthgang, der beliebig geformt sein kann. In einer eher einfachen Ausführung umfaßt der Verlauf des Labyrinthganges einen ersten Gangabschnitt und einen zweiten, sich unter einem Winkel (beispielsweise größer als 45° und insbesondere gleich 90°) an den ersten Gangabschnitt anschließenden zweiter Gangabschnitt (die Übergänge zwischen den Gangabschnitten können hierbei gekrümmt verlaufen). Der Verlauf des Labyrinthganges kann selbstverständlich auch beliebig kompliziert sein, mit mehreren sich unter bestimmten Winkeln aneinander anschließenden Gangabschnitten. Der Verlauf kann über seine gesamte Länge oder zumindest abschnittsweise gekrümmt sein. Auch ist die grundsätzliche Ausrichtung des Labyrinthganges bzw. von dessen Hauptgangabschnitt bezüglich der Motorwelle des Außenläufermotors beliebig. Es kann vorgesehen werden, daß der Hauptgangabschnitt radial zur Motorwelle verläuft, oder auch axial, oder schräg.

Bei einem Ausführungsbeispiel ist ein Dichtring im Labyrinthgang angeordnet, der eine am Rotor oder Stator schleifende Dichtlippe, und wenigstens eine an seiner Außenseite umlaufende und in den Labyrinthgang ragende Erhöhung umfaßt. Zur Ausbildung von Dichtlippe und Erhöhung kann der Dichtring einstückig oder mehrstückig (z.B. zweiteilig) ausgestaltet sein. Sowohl die Dichtlippe als auch die Erhöhung werden aufgrund des üblicherweise rotationssymmetrischen Aufbaus des Rotors (Glockenform) eine entsprechende Ringform aufweisen. Die ein- oder mehrstückig ausgebildete Einheit aus Dichtlippe und Erhöhung kann in einem Gangabschnitt des Labyrinthganges angeordnet sein, oder über mehrere Gangabschnitte verteilt sein. Dichtlippe und Erhöhung können beispielsweise in einem radial und einem axial verlaufenden Gangabschnitt vorgesehen sein. Zudem kann die umlaufende Dichtlippe auch in einer Spiralform am Rotor oder Stator schleifen (d.h. mehrere Umläufe aufweisen), oder in einer beliebigen anderen Art und Weise. Die Dichtlippe sollte eine vollständige Abdichtung zwischen Motoraußen- und innenraum gewährleisten, d.h. einen durchgehenden Verlauf aufweisen. Selbstverständlich kann die Dichtung mehrere der Dichtlippen aufweisen, die wegen ihrer geringen Auflagefläche auf den sich vorbeidrehenden Wandabschnitten des Labyrinthganges auch nur zu geringen Reibungskräften führen.

Die Erhöhung kann soweit in den Labyrinthgang ragen, daß nur ein sehr geringer Spalt zwischen der Oberseite der Erhöhung und dem der Oberseite gegenüberliegendem Wandabschnitt des Labyrinthgangs vorliegt. Damit kann die Erhöhung beispielsweise von außen in den Motor eindringendes direktes Spritzwasser daran hindern, weiter in den Labyrinthgang einzudringen, bzw. dessen Druck stark vermindern. Hierbei wird der Spritzwasserdruck auf die bevorzugt im Labyrinthgang dahinter (d.h. in Richtung des Motorinnenraums) angeordnete Dichtlippe vermindert und somit deren Dichtfunktion erhöht. Bei diesem Ausführungsbeispiel soll die Erhöhung jedoch nicht am sich vorbeidrehenden Wandabschnitt des Labyrinthganges schleifen, damit die von der Dichtung hervorgerufenen Reibungskräfte niedrig gehalten werden. Dies wird angestrebt, da sich die Dichtung im achsfernen Bereich des glockenförmigen Rotors befindet, wo die Umlaufgeschwindigkeiten entsprechend hoch sind, und zu starke Reibungskräfte einerseits zu einer Verminderung der Motorleistung und andererseits zu einem erhöhten Abrieb der Dichtung führen würden. In einem Ausführungsbeispiel kann die Erhöhung auch einfach durch eine entsprechende materialmäßige Ausgestaltung des Dichtringes realisiert werden, indem der Dichtring also unmittelbar mit seiner gesamten Außenseite in den Labyrinthgang ragt. Die Dichtlippe kann dann an einem Stirnende, oder auch an beliebiger Stelle an der Außen- oder auch der Innenseite des Dichtringes vorgesehen sein, und entsprechend an einem Wandabschnitt des Labyrinthganges schleifen, der auch dieser erhöhten Außenseite gegenüberliegt, oder an einem anderen Wandabschnitt des Labyrinthganges. Die Erhöhung kann also unmittelbar in die Dichtlippe übergehen.

Bei einem weiteren Ausführungsbeispiel sind jedoch mehrere an der Außenseite des Dichtrings umlaufende Erhöhungen vorgesehen, zwischen denen Zwischenräume angeordnet sind, die Staubkammern zum Erzeugen eines Druckabfalls bilden. Diese Erhöhungen können wiederum einstückig am Dichtring ausgebildet sein, oder aber auch als mehrere getrennte Einzelteile der Dichtung vorgesehen sein. Die Erhöhungen können dabei in verschiedene Gangabschnitte des Labyrinthganges ragen. Wird jedoch ein einfacher Aufbau der Dichtung angestrebt, so ragen die Erhöhungen alle in den gleichen Gangabschnitt des Labyrinthganges und sind einstückig untereinander und mit der Dichtlippe verbunden.

Bei einem weiteren Ausführungsbeispiel schleift die Dichtlippe im wesentlichen linienförmig am Rotor oder Stator, um die Reibkräfte nochmals zu vermindern. Hierzu wird die Dichtlippe in Richtung ihrer Auflagefläche entsprechend dünnwandig ausgebildet, und/oder schleift bei einem weiteren Ausführungsbeispiel unter einem schrägen Winkel am Rotor oder Stator.

Bei einem weiteren Ausführungsbeispiel ist der Labyrinthgang aus einer in Axialrichtung verlaufenden Ausnehmung im Rotor oder Stator und aus einem in Axialrichtung verlaufenden Vorsprung am Stator bzw. Rotor gebildet, wobei der Vorsprung in die Ausnehmung ragt. Dies stellt eine einfache Ausgestaltung des Labyrinthganges dar, dessen Gesamtverlauf hierbei im wesentlichen parallel zur Axialrichtung ist und insgesamt einmal um im wesentlichen 180° umgelenkt wird. Solche Vorsprünge und Ausnehmungen lassen sich auch relativ einfach bei gegossenen Gehäuseteilen herstellen.

Bei einem weiteren Ausführungsbeispiel ist der Dichtring am Vorsprung insbesondere formschlüssig befestigt, beispielsweise indem das Innenprofil des Dichtrings komplementär zum Außenprofil des Vorsprungs ausgebildet ist. Bei entsprechender Ausgestaltung des Profils von Dichtring und Vorsprung kann ein Klipsverschluß zwischen Dichtring und Gehäuseteil realisiert werden. Selbstverständlich kann der Dichtring auch auf jede andere Art und Weise im Außenläufermotor befestigt sein, beispielsweise geklebt, reibschlüssig angebracht oder mit sonstigen Befestigungsmitteln befestigt. Es können auch verschiedene solcher Befestigungsmöglichkeiten kombiniert werden, wie beispielsweise ein Formschluß und ein Verkleben.

Bei einem weiteren bevorzugten Ausführungsbeispiel ist der Dichtring aus Teflon hergestellt, wodurch der Reibschluß zwischen Dichtlippe und dem sich vorbeidrehenden Gehäuseteil vermindert ist. Selbstverständlich können auch andere Materialien mit einem niedrigen Reibungskoeffizienten verwendet werden, die insbesondere in ihrer Materialhärte auf die Materialhärte der zu beschleifenden Fläche abgestimmt sind. Die Dichtlippe des Dichtringes kann auch im Bereich ihrer schleifenden Fläche eine entsprechend reibungsvermindernde Beschichtung aufweisen, während das übrige Material eine bestimmte Elastizität zum Sicherstellen eines geeigneten Anpreßdruckes der Dichtlippe an die zu beschleifende Fläche aufweist.

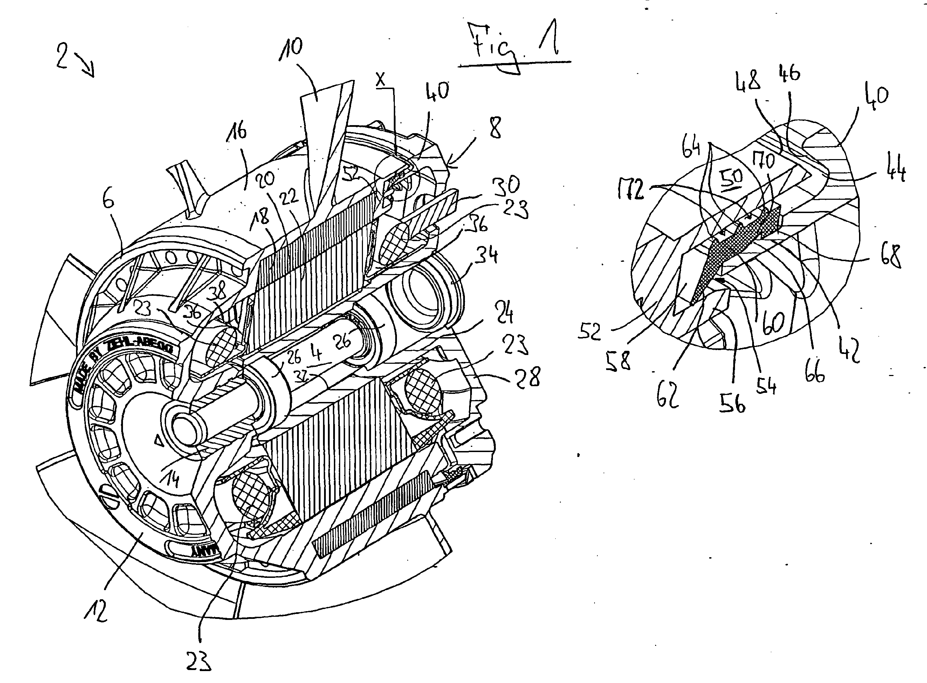

Der Außenläufermotor wird nunmehr detaillierter mit Bezug auf Fig. 1 beschrieben. Die Fig. 1 zeigt einen Außenläufermotor 2 mit einer Welle 4, einem an der Welle 4 befestigten glockenförmigen Rotor 6 und einem drehbar bezüglich der Welle gelagerten Stator 8. Der Außenläufermotor 2 kann beispielsweise als Antrieb für einen Ventilator verwendet werden, wobei hierzu an der Außenseite des Rotors 6 Ventilatorflügel 10 angegossen oder sonstwie befestigt sind. Eine zentral in der Rotorhaube 12 angeordnete und dort formschlüssig eingelassene Rotorbuchse 14 verbindet den glockenförmigen Rotor 6 fest mit der Welle 4. Ein Rotorblechpaket 18 ist in der Innenseite des im wesentlichen zylindrisch ausgebildeten Rotorumgußes 16 eingelassen. Das Rotorblechpaket 18 steht über einen zylindrischen Luftspalt 20 einem radial innenseitig liegenden Statorpaket 22 mit einer Statorwicklung 23 gegenüber. Das Statorpaket 22 ist an der Außenwand einer Statorbuchse 24 des Stators 8 befestigt, die wiederum über zwei über die Länge der Welle 4 verteilte Achslager mit der Welle 4 drehbar gekoppelt ist. Die Statorbuchse 24 erstreckt sich dabei in Axialrichtung von der Rotorhaube 12 bis hin zum der Rotorhaube 12 gegenüberliegenden Stirnende des Außenläufermotors 12. Dort schließt sich ein radial nach außen bis zur zylindrischen Wand des Rotorumgußes 16 verlaufender Statorflansch 28 an, der Teil der Statorbuchse 24 ist. Dieser Statorflansch 28 kann beispielsweise mit einem Befestigungsgitter des Ventilators verbunden sein. Elektrische Zuleitungen 30 versorgen die um das Statorpaket 22 gewickelte Statorwicklung 23 mit Strom, und sind hierzu durch den Statorflansch 28 hindurch dicht geführt.

Eine zylindrische Anlageschulter 32 an der Innenseite der Statorbuchse 24 hält die beiden Achslager 26 voneinander beabstandet. Ein Verschlußstopfen 34 dichtet die Statorbuchse 24 ab, deren der Rotorhaube 12 gegenüberliegendes Stirnende offen ausgebildet ist. Das Statorpaket 22 ist mittels einer Klebeverbindung an der Statorbuchse 24 befestigt. Als Kunstoffteile ausgebildete Isolierscheiben 36 halten die Statorwicklung 23 in Lage um das Statorpaket 22 und liegen hierzu einerseits in einer entsprechenden Aufnahme 38 in der Rotorhaube 12 und andererseits am gegenüberliegenden Ende der Statorbuchse 24 an deren Außenseite.

Wie aus dem detaillierteren Ausschnitt der Fig. 1 ersichtlich wird, bildet der Statorflansch 28 an seinem radial außen liegenden Rand einen in Umfangsrichtung des Außenläufermotors 2 umlaufenden Saum 40, der sich in Axialrichtung zur Rotorhaube 12 hin erstreckt. Die Stirnseite des Saums 40 springt schräg radial nach innen und geht in einen in Axialrichtung zur Rotorhaube 12 hin verlaufenden Vorsprung 42 über. Durch das Zurückspringen wird am Saum 40 eine im wesentlichen in Axialrichtung von der Rotorhaube 12 weg gerichtete Rille 44 gebildet. Diese Rille 44 zeichnet sich durch einen schräg zur Radialrichtung verlaufenden Bodenabschnitt 46 aus. Das offene Stirnende des Rotorumgußes 16 weist eine parallel zum Bodenabschnitt 46 verlaufende Stirnfläche 48 auf. Insgesamt ist der äußerste Abschnitt 50 des Stirnendes des Rotorumgußes 16 materialmäßig schlanker als der übrige Wandabschnitt der zylindrischen Wand 16 ausgebildet. Bei einem nicht weiter dargestellten Ausführungsbeispiel kann die Wandstärke des Rotorumgußes 16 über dessen gesamte Länge gleich sein. Vor dem Abschnitt 50 schließt sich ein Kurzschlußring 52 des Rotors 6 als radial nach innen verlaufender Wandabschnitt des Rotorumgußes 16 an.

In diesem Wandabschnitt ist eine sich in Axialrichtung hin zur Rotorhaube 12 erstreckende Ausnehmung 54 ausgebildet. Radial nach außen wird die Ausnehmung 54 durch den Abschnitt 50 begrenzt, und radial nach innen durch einen Steg 56. In diese Ausnehmung 54 ragt der Vorsprung 42, und zwar soweit, daß sein Stirnende in fast gleicher Höhe zum Stirnende des Steges 56 liegt. Die radial außen liegende Außenfläche des Stegs 56 ist in dessen Stirnbereich abgeschrägt, also dort, wo das Stirnende des Vorsprungs 42 dem Steg 56 gegenüberliegt.

Im durch die Ausnehmung 54 und den Vorsprung 42 sowie den Bodenabschnitt 46 und der Stirnfläche 48 gebildeten Labyrinthgang 58 ist eine Dichtung in Form eines Dichtringes 60 angeordnet. Der Dichtring 60 weist eine Dichtlippe 62 und drei Erhöhungen 64 auf, die einstückig miteinander verbunden sind. Der Dichtring 60 ist am Vorsprung 42 formschlüssig befestigt. Hierzu ist das Innenprofil der Innenfläche des Dichtrings 60 komplementär zum Außenprofil der radial außen liegenden Außenfläche des Vorsprungs 42 ausgebildet. Im gezeigten Beispiel weist das Außenprofil des Vorsprungs 42 einen rampenförmigen Abschnitt 66 mit einer sich daran anschließenden Hinterschneidung 68 auf, wobei der rampenförmige Abschnitt 66 in eine entsprechend ausgebildete Rille 70 des Dichtrings 60 eingreift. Bei ihrer Montage wird die Dichtung 60 einfach auf den Vorsprung 42 aufgeklipst, wobei der rampenförmige Abschnitt 66 den Innendurchmesser des Dichtringes 60 bei der Montage entsprechend aufweitet und die Hinterschneidung 68 den aufgeklipsten Dichtring 60 axial festlegt. Der Dichtring 60 kann zusätzlich noch mit dem Vorsprung 42 verklebt werden.

Die drei Erhöhungen 64 sind in Axialrichtung der Ausnehmung 54 voneinander beabstandet und ragen im wesentlichen radial nach außen in Richtung des Abschnitts 50 der zylindrischen Wand 16. Dabei ist ihre Höhe so bemessen, daß sie nicht an der Innenseite des Abschnitts 50 schleifen, jedoch einen möglichst dichten Abschluß des Labyrinthganges gewährleisten.

Zwischen den Erhöhungen 64 sind Zwischenräume 72 ausgebildet, die als Staubkammern zum Erzeugen eines Druckabfalls funktionieren.

Die Dichtlippe 62 ist am der Rotorhaube 12 zugewandten Stirnende des Dichtrings 60 ausgebildet und ragt radial schräg nach innen in Richtung zur Welle 4. Die Länge der Dichtlippe 62 ist so bemessen, daß sie an der radial außenliegenden Außenfläche des Steges 56 schleift. Die Dichtlippe 62 verjüngt sich dabei in Richtung ihres schleifenden Endes. Insgesamt greift sie somit einerseits unter einem schrägen Winkel auf die Außenfläche des Steges 56 ein und berührt diese andererseits im wesentlichen nur linienförmig. Die Dichtung 60 wird bevorzugt aus Teflon hergestellt, insbesondere durch spanende Bearbeitung. Die gesamten Gehäuseteile des Außenläufermotors 2 sind beispielsweise als Aluminiumgußteile gefertigt.

Ein allgemeiner Zweck des Außenläufermotors gemäß der diskutierten Ausführungsbeispiele ist beispielsweise die Abdichtung des Motorinnenraums entsprechend der Schutzart IP55 für drehende elektrische Maschinen, die eine staub- und strahlwassergeschützte Abdichtung der elektrischen Maschine fordert. Von außen durch den Labyrinthgang 58 in Richtung Motorinnenraum eintretendes Strahlwasser wird durch die Erhöhungen 64 gebrochen und kommt daher nicht mit dem vollen Druck an der eigentlichen Dichtfläche, der Dichtlippe 62 an. Insgesamt ist mit der speziellen Ausgestaltung der Dichtung die Abdichtung eines meist rotationssymmetrischen Spaltes mit einem insbesondere großen Durchmesser im achsfernen Bereich des Außenläufermotors 2 gelungen.

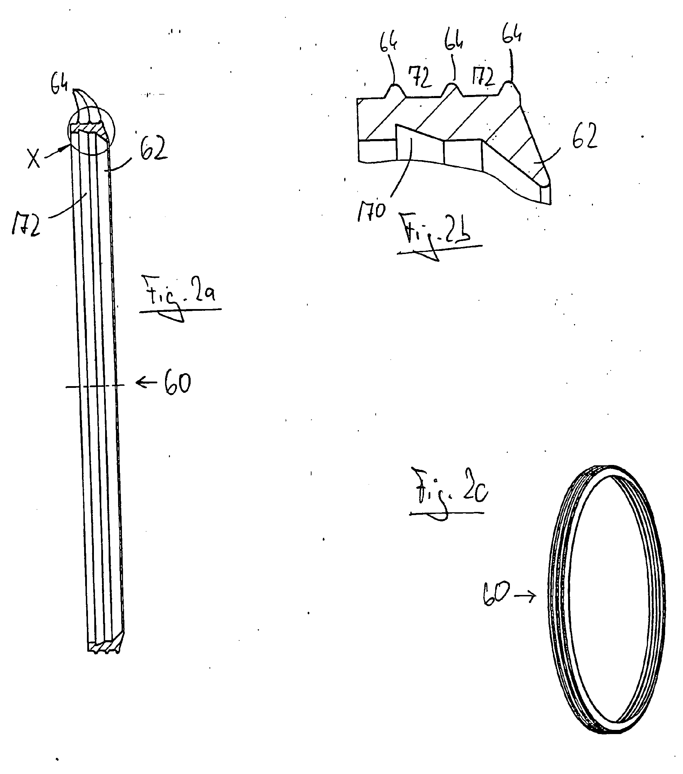

Die Fig. 2a-c zeigen die Dichtung 60 noch einmal im ausgebauten Zustand jeweils im Längsschnitt, Querschnitt und in einer perspektivischen Ansicht.

Es sei erwähnt, daß anstelle der oben im Detail diskutierten Anordnung der Ausnehmung 54 am Rotor 6 auch eine entsprechende Anordnung am Stator 8 denkbar ist, wobei der Vorsprung 54 dann entsprechend am Rotor 6 ausgebildet ist. Weiterhin kann der Dichtring 60 auch mit dem Rotor 6 fest verbunden sein und dessen Dichtlippe 62 am Stator 8 schleifen. Beispielsweise kann im in Fig. 1 gezeigten Ausführungsbeispiel der Dichtring 60 an der Innenfläche des Abschnitts 50 befestigt sein, die Dichtlippe 62 also am Vorsprung 32 schleifen und die Erhöhungen 64 radial nach innen ragen.

## Patentansprüche

1. Außenläufermotor, mit:
- einem im wesentlichen glockenförmigen Rotor (6),
- einem Stator (8), und
- einer Dichtung zwischen Rotor (6) und Stator (8) zur Abdichtung des Motorinnenraums, die am achsfernen offenen Ende des Rotors (6) angeordnet ist,
**dadurch gekennzeichnet, daß** die Dichtung folgendes umfaßt:
- einen Labyrinthgang (58), und
- einen im Labyrinthgang (58) angeordneten Dichtring (60), wobei der Dichtring (60) folgendes umfaßt:
- eine am Rotor (6) oder Stator (8) schleifende Dichtlippe (62), und
- wenigstens eine an seiner radialen Außenseite axial umlaufende und in den Labyrinthgang (58) ragende Erhöhung (64), die soweit in den Labyrinthgang ragt, daß nur ein sehr geringer Spalt zwischen der Oberseite der Erhöhung und dem der Oberseite gegenüberliegenden Wandabschnitt des Labyrinthgangs vorliegt, und die im Labyrinthgang (58) - in Richtung von außen nach innen in den Motorinnenraum gesehen - vor der Dichtlippe (62) angeordnet ist.

2. Außenläufermotor nach Anspruch 1, bei dem mehrere axial umlaufende Erhöhungen (64) vorgesehen sind, zwischen denen Zwischenräume (72) angeordnet sind, die Staubkammern zum Erzeugen eines Druckabfalls bilden.

3. Außenläufermotor nach einem der vorhergehenden Ansprüche, bei dem die Dichtlippe (62) im wesentlichen linienförmig am Rotor (6) oder Stator (8) schleift.

4. Außenläufermotor nach einem der vorhergehenden Ansprüche, bei dem die Dichtlippe (62) unter einem schrägen Winkel am Rotor (6) oder Stator (8) schleift.

5. Außenläufermotor nach einem der vorhergehenden Ansprüche, bei dem der Labyrinthgang (58) aus einer in Axialrichtung verlaufenden Ausnehmung (54) im Rotor (6) oder Stator (8) und aus einem in Axialrichtung verlaufenden Vorsprung (42) am Stator (8) bzw. Rotor (6) gebildet ist, wobei der Vorsprung (42) in die Ausnehmung (54) ragt.

6. Außenläufermotor nach Anspruch 5, bei dem der Dichtring (60) am Vorsprung (42) befestigt ist.

7. Außenläufermotor nach einem der vorhergehenden Ansprüche, bei dem der Dichtring (60) am Rotor (6) oder Stator (8) formschlüssig befestigt ist.

8. Außenläufermotor nach Anspruch 7, bei dem das Außenprofil des Vorsprungs (42) komplementär zum Innenprofil des Dichtrings (60) ausgebildet ist, und der Dichtring (60) formschlüssig auf den Vorsprung (42) aufgeklipst ist.

9. Außenläufermotor nach einem der vorhergehenden Ansprüche, bei dem die Erhöhungen (54) in einem in Axialrichtung verlaufenden Abschnitt des Labyrinthgangs (58) liegen und sich im wesentlichen in Radialrichtung erstrecken.

10. Außenläufermotor nach einem der Ansprüche 5 bis 9, bei dem die Dichtlippe (62) an der radial innen gelegenen Innenfläche der in Axialrichtung verlaufenden Ausnehmung (54) schleift, und die wenigstens eine Erhöhung (64) sich in Richtung der radial außen gelegenen Innenfläche dieser Ausnehmung (54) erstreckt.

11. Außenläufermotor nach einem der vorhergehenden Ansprüche, bei dem die Dichtlippe (62) von einem Stirnende des Dichtrings (60) und die wenigstens eine Erhöhung (64) von einer Außenseite des Dichtrings (60) absteht.

12. Außenläufermotor nach einem der vorhergehenden Ansprüche, bei dem der Dichtring (60) aus Teflon ist.

13. Außenläufermotor nach einem der vorhergehenden Ansprüche, bei dem der Dichtring (60) spanend hergestellt ist.

## Claims

1. An external rotor motor, comprising:
- a substantially bell-shaped rotor (6),
- a stator (8), and
- a seal between the rotor (6) and the stator (8) to seal the interior of the motor, which is disposed on the abaxial open end of the rotor (6),
**characterised in that** the seal includes the following:
- a labyrinth passage (58), and
- a sealing ring (60) disposed in the labyrinth passage (58), the sealing ring comprising the following:
- a sealing lip (62) rubbing against the rotor (6) or stator (7), and
- at least one ridge (64) that is axially circumferential at its radial outer surface and projects into the labyrinth passage (58), which ridge projects into the labyrinth passage far enough for a very narrow gap to exist between the upper surface of the ridge and the wall portion of the labyrinth passage opposite the upper surface, and which is disposed in the labyrinth passage (58) in front of the sealing lip (62) - seen from the outside to the inside into the interior of the motor.

2. An external rotor motor according to Claim 1, in which several axially circumferential ridges (64) are provided, between which are disposed clearances (72) forming dust chambers for generating a pressure drop.

3. An external rotor motor according to one of the preceding Claims, in which the sealing lip (62) rubs substantially linearly against the rotor (6) or the stator (8) .

4. An external rotor motor according to one of the preceding Claims, in which the sealing lip (62) rubs at an acute angle against the rotor (6) or the stator (8).

5. An external rotor moor according to one of the preceding Claims, in which the labyrinth passage (58) is formed from a recess (54), running in the axial direction, in the rotor (6) or stator (8) and from a projection (42), running in the axial direction, on the stator (8) or rotor (6), with the projection (42) projecting into the recess (54) .

6. An external rotor motor according to Claim 5, in which the sealing ring (60) is attached to the projection (42).

7. An external rotor motor according to one of the preceding Claims, in which the sealing ring (60) is attached with positive fit on the rotor (6) or stator (8).

8. An external rotor motor according to Claim 7, in which the external profile of the projection (42) is designed to complement the interior profile of the sealing ring (60), and the sealing ring (60) is clipped with positive fit onto the projection (42).

9. An external rotor motor according to one of the preceding Claims, in which the ridges (54) lie in a portion of the labyrinth passage (58) running in the axial direction and extend substantially in the radial direction.

10. An external rotor motor according to one of Claims 5 to 9, in which the sealing lip (62) rubs against the radially inwardly positioned inner surface of the recess (54) running in the axial direction, and the at least one ridge (64) extends towards the radially outwardly positioned inner surface of this recess (54).

11. An external rotor motor according to one of the preceding Claims, in which the sealing lip (62) sticks out from a front end of the sealing ring (60) and the at least one ridge (64) sticks out from an outer face of the sealing ring (60).

12. An external rotor motor according to one of the preceding Claims, in which the sealing ring (60) is made from Teflon.

13. An external rotor motor according to one of the preceding Claims, in which the sealing ring (60) is produced by metal cutting.

## Revendications

1. Moteur avec un rotor externe, comprenant :
- un rotor sensiblement en forme de cloche (6),
- un stator (8), et
- un joint entre le rotor (6) et le stator (8) pour l'étanchéité de l'intérieur du moteur, disposé sur l'extrémité ouverte du rotor (6) distante de l'axe,
**caractérisé en ce que** le joint comporte les éléments suivants :
- un labyrinthe (58), et
- une bague d'étanchéité (60) disposée dans le labyrinthe (58), ladite bague d'étanchéité (60) comprenant les éléments suivants :
- une lèvre d'étanchéité (62) glissant contre le rotor (6) ou le stator (8), et
- au moins une nervure (64) axialement circulaire sur sa face radiale extérieure, laquelle fait saillie dans le labyrinthe (58) jusqu'à ce que seule une fente très réduite reste formée entre la face supérieure de la nervure et la partie de paroi du labyrinthe opposée à la face supérieure, et qui est disposée devant la lèvre d'étanchéité (62) dans le labyrinthe (58) - dans la direction s'étendant de l'extérieur vers l'intérieur du moteur.

2. Moteur avec un rotor externe selon la revendication 1, où plusieurs nervures (64) axialement circulaires sont prévues, entre lesquelles sont présents des interstices (72) formant des chambres à poussière pour générer une chute de pression.

3. Moteur avec un rotor externe selon l'une des revendications précédentes, où la lèvre d'étanchéité (62) glisse sensiblement linéairement contre le rotor (6) ou le stator (8) .

4. Moteur avec un rotor externe selon l'une des revendications précédentes, où la lèvre d'étanchéité (62) glisse obliquement contre le rotor (6) ou le stator (8).

5. Moteur avec un rotor externe selon l'une des revendications précédentes, où le labyrinthe (58) est formé par un évidement (54) s'étendant dans le rotor (6) ou le stator (8) en direction axiale, et par une saillie (42) s'étendant contre le rotor (6) ou le stator (8) en direction axiale, ladite saillie (42) s'étendant dans l'évidement (54).

6. Moteur avec un rotor externe selon la revendication 5, où la bague d'étanchéité (60) est fixée sur la saillie (42).

7. Moteur avec un rotor externe selon l'une des revendications précédentes, où la bague d'étanchéité (60) est fixée contre le rotor (6) ou le stator (8) par complémentarité de forme.

8. Moteur avec un rotor externe selon la revendication 7, où le profil extérieur de la saillie (42) est réalisé avec une forme complémentaire au profil intérieur de la bague d'étanchéité (60), et où la bague d'étanchéité (60) est enclenchée par complémentarité de forme sur la saillie (42).

9. Moteur avec un rotor externe selon l'une des revendications précédentes, où les nervures (64) sont situées sur une partie du labyrinthe (58) s'étendant en direction axiale, et s'étendent sensiblement en direction radiale.

10. Moteur avec un rotor externe selon l'une des revendications 5 à 9, où la lèvre d'étanchéité (62) glisse contre la surface intérieure, radialement intérieure, de l'évidement (54) s'étendant en direction axiale, et où la ou les nervures (64) s'étendent vers la surface intérieure, radialement extérieure, de cet évidement (54).

11. Moteur avec un rotor externe selon l'une des revendications précédentes, où la lèvre d'étanchéité (62) dépasse d'une extrémité frontale de la bague d'étanchéité (60), et où la ou les nervures (64) dépassent d'une face extérieure de la bague d'étanchéité (60).

12. Moteur avec un rotor externe selon l'une des revendications précédentes, où la bague d'étanchéité (60) est en téflon:

13. Moteur avec un rotor externe selon l'une des revendications précédentes, où la bague d'étanchéité (60) est fabriquée avec enlèvement de copeaux.
